# DEMANDE DE BREVET EUROPEEN

(11) **EP 2 587 411 A1**
(43) Date de publication de la demande: **01.05.2013**
(21) Numéro de dépôt: 12190194.6
(22) Date de dépôt: 26.10.2012
(51) Int. Cl.: G06K 19/07, G06F 21/77

(54) **Dispositif électronique et procédé de signature par heure certaine**

(30) Priorité: 27.10.2011 FR 1159742
(71) Demandeur: Oberthur Technologies, 92300 Levallois-Perret (FR)
(72) Inventeur: Collier, Benoît, 92600 ASNIERES-SUR-SEINE (FR)
(74) Mandataire: Quantin, Bruno Marie Henri

(57) **Abrégé**

Dispositif électronique, du type mémoire sécurisée, comprenant un moyen d'horodatage (10) apte à déterminer une heure certaine à partir d'un signal horodateur (12) radio fréquentiel.

Procédé de signature électronique utilisant un tel dispositif (1).

## Description

La présente invention concerne un dispositif électronique apte à déterminer une heure certaine et l'utilisation de ce dispositif électronique pour certifier une heure ou pour réaliser une signature électronique.

Une signature électronique, afin d'être sure et utilisable, doit satisfaire à plusieurs critères. Ainsi, en France, afin d'avoir valeur légale, une signature électronique, telle que définie par le décret n°2001-272 du 30 mars 2001, ensemble l'article 1316-4 du code civil, doit :
i) - être propre au signataire,
ii) - être créée par des moyens que le signataire puisse garder sous son contrôle exclusif,
iii) - garantir avec l'acte auquel elle s'attache un lien tel que toute modification ultérieure de l'acte soit détectable.

Il est connu pour réaliser une telle signature électronique d'une donnée, d'utiliser un dispositif électronique.

Une conservation de ce dispositif électronique sous surveillance par un signataire garantit que la signature que permet de réaliser le dispositif électronique est propre audit signataire, en possession dudit dispositif électronique. Le propriétaire du dispositif électronique est réputé être le signataire. Ceci permet de réaliser i).

Ceci peut encore être renforcé par une procédure d'authentification de propriétaire à laquelle doit se soumettre le propriétaire du dispositif électronique avant ou pendant la réalisation d'une signature, afin de prouver qu'il est bien le signataire. La procédure d'authentification peut comprendre, de manière connue, la fourniture d'un code secret (par exemple un code PIN) et/ou une vérification biométrique (iris, empreinte digitale).

Une telle authentification garantit de plus que le signataire/propriétaire garde un contrôle exclusif sur la réalisation d'une signature et permet de réaliser ii).

Afin de réaliser iii), il convient de rendre unique une signature et d'y associer un élément attaché à l'acte/la donnée signée. Pour cela l'heure de l'acte/signature est avantageusement utilisée.

Actuellement, une signature électronique au moyen d'un dispositif électronique comprend typiquement les étapes suivantes.

Une première étape optionnelle, peut consister en une authentification du signataire.

Une seconde étape consiste en une connexion du dispositif électronique à un tiers horodateur, afin de récupérer une heure certaine.

Au cours d'une troisième étape, la donnée à signer et l'heure certaine sont transmises au dispositif électronique. Ce dernier réalise la signature proprement dite. Ceci est typiquement réalisé en appliquant à ladite donnée et à ladite heure certaine un algorithme de signature, par exemple cryptographique, afin de produire une signature.

La signature ainsi obtenue peut ensuite être transmise, en tant que de besoin, du dispositif électronique à un terminal utilisateur/demandeur.

Les problèmes qui apparaissent sont de plusieurs ordres. Un premier problème est que l'heure doit être certaine, avec le moins possible de possibilités de modification, frauduleuses ou non. Ceci est réalisé par exemple, par une connexion, typiquement au moyen d'un réseau de communication, tel Internet, à un tiers horodateur. Afin de garantir la certification de l'heure, ce tiers horodateur est avantageusement un serveur sécurisé ou tiers de confiance. La connexion peut encore avantageusement être sécurisée. Ceci nécessite cependant des moyens et des procédures complexes.

Un deuxième problème est de nécessiter une connexion audit réseau. Ceci peut être contraignant en terme de moyen d'interface, surtout pour un dispositif électronique qui peut être très petit, et ne pas posséder en propre une interface de connexion réseau. Ceci est encore contraignant en terme de disponibilité, une signature nécessitant, spatialement et temporellement, un accès au réseau et une disponibilité dudit réseau.

La présente invention remédie à ces différents inconvénients en proposant un moyen d'horodatage accessible au dispositif électronique, sans pour autant nécessiter de connexion réseau.

L'invention a pour objet un dispositif électronique, du type mémoire sécurisée, comprenant un moyen d'horodatage apte à déterminer une heure certaine à partir d'un signal horodateur radio fréquentiel.

Selon une autre caractéristique de l'invention, le dispositif électronique est une carte à microcircuit ou une clé USB.

Selon une autre caractéristique de l'invention, le moyen d'horodatage comprend au moins une antenne radiofréquence et un récepteur radiofréquence.

Selon une autre caractéristique de l'invention, le moyen d'horodatage est apte à recevoir et à traiter un signal horodateur public.

Avantageusement, le signal horodateur public peut être le signal DCF77. On peut également envisager d'autres signaux radiofréquences tels que par exemple ceux décrits plus avant dans cette description.

Selon une autre caractéristique de l'invention, le dispositif électronique comprend encore un moyen d'alimentation autonome embarqué sur le dispositif électronique apte à alimenter le dispositif électronique.

Par moyen d'alimentation autonome on peut comprendre par exemple une pile, une batterie, un condensateur ou tout autre moyen pour maintenir un niveau d'énergie suffisant apte à faire fonctionner le dispositif électronique pendant une durée déterminée.

Pour la suite de la description nous utiliserons indifféremment le terme moyen d'alimentation autonome ou batterie.

Selon une autre caractéristique de l'invention, le dispositif comprend encore un deuxième moyen d'horodatage, apte à déterminer une heure locale.

L'invention concerne encore un procédé de certification d'une heure, utilisant un tel dispositif électronique, comprenant les étapes de : réception d'une heure fournie, détermination d'une heure certaine, comparaison de l'heure fournie et de l'heure certaine, production d'un résultat de certification, positif si l'heure fournie est sensiblement égale à l'heure certaine et négatif sinon, où la détermination de l'heure certaine est réalisée au moyen dudit moyen d'horodatage.

L'invention concerne encore un procédé de signature électronique, utilisant un tel dispositif électronique, comprenant les étapes de : réception d'une donnée à signer, détermination d'une heure certaine, production d'une signature par application d'un algorithme de signature à ladite donnée à signer et à ladite heure certaine, où la détermination de l'heure certaine est réalisée au moyen dudit moyen d'horodatage.

Selon une autre caractéristique de l'invention, le procédé comprend encore les étapes de : réception d'une heure fournie, comparaison de l'heure fournie et de l'heure certaine, production de la signature seulement si l'heure fournie est sensiblement égale à l'heure certaine.

Selon une autre caractéristique de l'invention, l'heure fournie est une heure locale obtenue au moyen du deuxième moyen d'horodatage.

D'autres caractéristiques, détails et avantages de l'invention ressortiront plus clairement de la description détaillée donnée ci-après à titre indicatif en relation avec des dessins sur lesquels :
- la figure 1 présente un schéma d'un mode de réalisation du dispositif à base de carte à microcircuit
- la figure 2 présente un schéma d'un mode de réalisation du dispositif à base de clé USB,
- la figure 3 illustre un procédé de certification d'une heure,
- la figure 4 illustre un procédé de signature électronique.

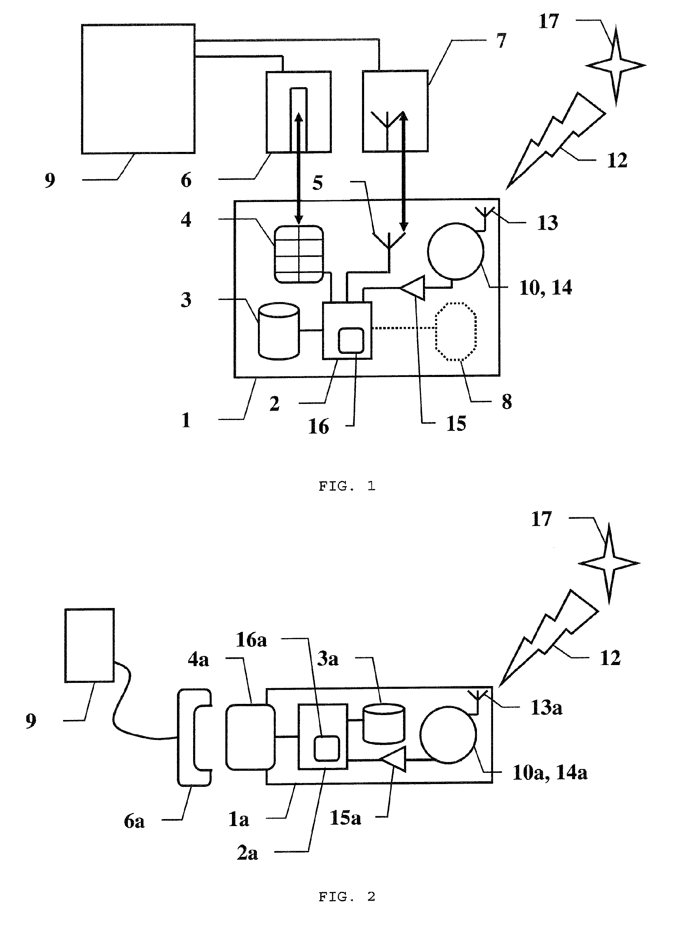

En se référant à la figure 1, l'invention concerne un dispositif électronique 1 du type mémoire sécurisée. Il est défini pour la présente un dispositif électronique 1 de type mémoire sécurisée comme un dispositif électronique comprenant une zone mémoire 3 apte à stocker de manière sécurisée des données informatiques sous forme numérique. Un tel dispositif électronique 1 comprend typiquement une zone mémoire 3 apte au stockage desdites données et un moyen de traitement 2. Le moyen de traitement 2, typiquement un microcontrôleur, est apte à gérer au moins une interface lui permettant de dialoguer avec l'extérieur du dispositif électronique 1. Ce dialogue, via le moyen de traitement 2 est le seul moyen d'accès, tant en lecture, qu'éventuellement en écriture à la zone mémoire 3. La zone mémoire 3 n'est pas accessible directement. Ceci permet de créer une mémoire sécurisée.

De plus, combiné à au moins une procédure permettant d'authentifier un détenteur d'un tel dispositif électronique 1, afin de vérifier qu'il s'agit de son propriétaire légitime, le signataire, permet de plus de sécuriser l'utilisation de ce dispositif électronique et des données qu'il sécurise.

Un premier exemple d'implémentation d'un tel dispositif électronique de mémoire sécurisée, illustré à la figure 1, est une carte à microcircuit 1 ou carte à puce. De telles cartes sont utilisées comme carte de signature telle que celles utilisées par les mandataires européens.

On pourrait également utiliser de telles cartes comme carte bancaire, comme carte d'identité, ou encore comme support d'abonnement téléphonique (carte SIM). Une telle carte à microcircuit 1 comporte un microcontrôleur 2, une zone mémoire 3 et peut comporter une plaque de contact 4 permettant à un lecteur à contact 6 d'alimenter le dispositif électronique 1 et de dialoguer avec lui, afin d'accéder à la mémoire 3. Une telle carte 1 comporte encore avantageusement, alternativement ou de manière complémentaire, une antenne 5 permettant à un lecteur sans contact 7 d'alimenter le dispositif électronique 1 et de dialoguer avec lui, afin d'accéder à la mémoire 3. Le lecteur de dispositif à contact 6 et/ou sans contact 7 est par exemple connecté à un terminal 9.

Un deuxième exemple d'implémentation d'un tel dispositif électronique de mémoire sécurisée, illustré à la figure 2, est une clé USB 1a. Une clé USB 1a est un dispositif électronique comprenant une zone mémoire 3a accessible via un moyen de traitement 2a. Une telle clé USB 1a comprend une interface et un connecteur USB 4a permettant, via une connexion USB 6a, qui remplit ici les fonctions du lecteur 6 de l'exemple précédent, d'alimenter le dispositif électronique 1a et de dialoguer avec lui, afin d'accéder à la mémoire 3a. La connexion USB 6a est par exemple connectée à un terminal 9.

D'autres exemples, présentant ces mêmes caractéristiques d'accès sécurisé à une zone mémoire 3, 3a, peuvent être trouvés ou créés par l'homme du métier.

Une heure certaine HC est nécessaire pour sécuriser un procédé de signature électronique.

Il est désigné, dans tout le présent document, par le vocable « heure » une datation généralisée ou horodatage. Une telle heure comprend l'heure effective dans la journée, mais aussi la date y compris le jour, le mois et l'année, afin que ladite heure généralisée soit unique.

Une telle heure peut être définie comme une durée depuis une date de référence. Ladite date de référence peut être quelconque, du moment qu'elle est connue du dispositif réalisant les calculs. La dite heure est définie avec une résolution d'au moins une minute, mais pouvant encore aller jusqu'au dixième de seconde ou au-delà.

Une heure est dite certaine si elle issue d'une source sûre, digne de confiance, difficile à modifier/leurrer, et qu'il est raisonnablement possible d'accorder un certain crédit à la valeur de ladite heure certaine HC, qui est alors réputée être sensiblement égale à l'heure réelle.

Il a été décrit que dans l'art antérieur, une heure certaine HC est obtenue par une connexion à un tiers horodateur, via un réseau tel Internet.

Un dispositif électronique 1, 1a de type mémoire sécurisée est typiquement un dispositif portatif. Ceci est avantageux afin de pouvoir le déplacer facilement et ainsi pouvoir en disposer partout pour réaliser une signature électronique. Un tel dispositif électronique 1, 1a est de ce fait le plus souvent trop petit pour embarquer des moyens de connexion au réseau.

Selon l'art antérieur, les moyens de connexion au réseau sont le plus souvent déportés et intégrés à un terminal 9. Ledit terminal 9 dialogue alors avec le dispositif électronique 1, 1a via un lecteur de dispositif 6, 7 (ou de manière équivalente une connexion USB 6a qui tient lieu de lecteur).

Une telle architecture est contraignante en ce qu'elle nécessite en plus du réseau, un terminal 9. De plus les différentes liaisons terminal 9 /lecteur 6, 7, lecteur 6, 7 / dispositif électronique 1, 1a, sont autant de points de faiblesse, en ce qu'elles constituent des moyens d'entrée ou d'interception possible pour un éventuel fraudeur/pirate.

Il est ainsi avantageux, de disposer d'un moyen d'horodatage 10 apte à déterminer une heure certaine HC, directement embarqué sur ou connecté avec le dispositif électronique 1, 1a.

Selon une caractéristique importante de l'invention, il peut être construit une heure certaine HC à partir d'un signal horodateur 12 radio fréquentiel. Pour cela, le dispositif électronique 1, 1a embarque un moyen d'horodatage 10, 10a apte à déterminer une heure certaine HC à partir d'un signal horodateur 12 radio fréquentiel. A l'exception dudit signal horodateur 12 radio fréquentiel, la totalité du moyen d'horodatage 10, 10a est intégré au dispositif électronique 1, 1a.

Ledit moyen d'horodatage 10, 10a comprend une antenne radiofréquence 13, 13a et un récepteur radiofréquence 14, 14a. Cette antenne 13, 13a et ce récepteur 14, 14a sont adaptés à la réception dudit signal horodateur 12 radio fréquentiel. Ainsi, ils sont tous deux avantageusement accordés en fréquence selon la fréquence dudit signal.

Il est à noter que, les fréquences utilisées étant typiquement très différentes, une antenne 13 spécifique à la réception du signal horodateur 12 doit être disposée. Il n'est généralement pas possible de réutiliser l'éventuelle antenne 5 servant à alimenter et à dialoguer sans contact avec le dispositif électronique 1.

Ledit moyen d'horodatage 10, 10a comprend encore, le cas échéant, un amplificateur 15, 15a entre l'antenne 13, 13a et le récepteur 14, 14a, afin d'augmenter, si besoin, la puissance du signal horodateur 12 reçue.

Ledit moyen d'horodatage 10, 10a comprend encore, au sein du récepteur 14, 14a et/ou sous forme d'un logiciel exécuté par le moyen de traitement 2, 2a du dispositif électronique 1, 1a, un décodeur du signal 16, 16a, apte à extraire dudit signal 12, des données d'horodatage.

Un tel principe suppose l'existence d'un tel signal 12 horodateur radio fréquentiel. Un tel signal horodateur 12 est par exemple émis par une station émettrice 17.

Plusieurs tels systèmes existent, émettant un signal d'horodatage public 12, apte à être reçu par un moyen d'horodatage 10 et traité pour produire une heure certaine HC.

Ces systèmes sont des systèmes d'horodatage publics et émettent régulièrement un signal radiofréquence 12 qui permet de déduire une heure très précise pour de nombreuses applications publiques : mise à l'heure des montres, fourniture d'une heure précise pour des dispositifs industriels, commerciaux ou destinés aux particuliers.

Il est possible de citer, à titre d'exemple le système d'horodatage public légal DCF77, qui fournit un signal radiofréquence 12. Ce signal est émis depuis le Physikalish-Technische Bundesanstalt, situé à Mainflingen, près de Francfort en Allemagne. Une portée de 1500 km permet de couvrir une grande partie de l'Europe de l'ouest. Ce système code, à partir d'une horloge atomique au césium, donc d'une heure quasi absolue, un signal 12. Ce signal 12 est modulé sur une porteuse à 77,5kHz.

Le signal horodateur 12 est modulé comme suit. Les informations sont transmises sous forme binaire à raison d'un bit par seconde à chaque seconde exactement. Les informations sont codées en binaire codé décimal (BCD). L'impulsion émise au début de chaque seconde dure 100ms pour un '0' logique et 200ms pour un '1'. La 59^{e} seconde (bit 60) n'est pas modulée et permet de synchroniser une nouvelle trame. Les informations transmises pendant une minute correspondent à l'heure qu'il sera au moment du prochain début de trame.

| **N° du bit** | **Dénomination** | **Signification** |
|---|---|---|
| 0-14 | | Réservés. |
| 15 - 19 | Diverses | Gestion - Configuration |
| 20 | S | Toujours à 1 : Début des informations horaires |
| 21 | 1 | Minute, poids 1 |
| 22 | 2 | Minute, poids 2 |
| 23 | 4 | Minute, poids 4 |
| 24 | 8 | Minute, poids 8 |
| 25 | 10 | Minute, poids 10 |
| 26 | 20 | Minute, poids 20 |
| 27 | 40 | Minute, poids 40 |
| 28 | P1 | Parité des bits de 21 à 27 (ajoute 1 si impaire, 0 si déjà paire) |
| 29 | 1 | Heure, poids 1 |
| 30 | 2 | Heure, poids 2 |
| 31 | 4 | Heure, poids 4 |
| 32 | 8 | Heure, poids 8 |
| 33 | 10 | Heure, poids 10 |
| 34 | 20 | Heure, poids 20 |
| 35 | P2 | Parité des bits de 29 à 34 (ajoute 1 si impaire, 0 si déjà paire) |
| 36 | 1 | Quantième, poids 1 |
| 37 | 2 | Quantième, poids 2 |
| 38 | 4 | Quantième, poids 4 |
| 39 | 8 | Quantième, poids 8 |
| 40 | 10 | Quantième, poids 10 |
| 41 | 20 | Quantième, poids 20 |
| 42 | 1 | Jour de la semaine, poids 1 |
| 43 | 2 | Jour de la semaine, poids 2 |
| 44 | 4 | Jour de la semaine, poids 4 |
| 45 | 1 | Mois, poids 1 |
| 46 | 2 | Mois, poids 2 |
| 47 | 4 | Mois, poids 4 |
| 48 | 8 | Mois, poids 8 |
| 49 | 10 | Mois, poids 10 |
| 50 | 1 | Année, poids 1 |
| 51 | 2 | Année, poids 2 |
| 52 | 4 | Année, poids 4 |
| 53 | 8 | Année, poids 8 |
| 54 | 10 | Année, poids 10 |
| 55 | 20 | Année, poids 20 |
| 56 | 40 | Année, poids 40 |
| 57 | 80 | Année, poids 80 |
| 58 | P3 | Parité des bits de 36 à 57 (ajoute 1 si impaire, 0 si déjà paire) |

La réception et le traitement d'un tel signal 12 pendant un peu plus d'une minute, afin de recevoir une trame complète, permet à tout moment, de déterminer une heure généralisée (comprenant la date) assez précise pour être qualifiée de certaine. De plus ce codage permet de réaliser simplement un récepteur/décodeur.

Nombre d'autres pays disposent de tels systèmes d'émission radiofréquence d'un signal d'horodatage 12. La France, depuis l'émetteur d'Allouis, émet un signal d'horodatage 12 selon un format similaire au signal DCF77. Les états unis avec la station de WWV émettent sur plusieurs fréquences porteuses un signal contenant chaque minute, l'heure généralisée complète. Le Canada émet un signal depuis l'émetteur CHU. On peut citer encore, le Venezuela (YVTO), l'Australie (VNG) selon un format proche du DCF77 mais selon des fréquences différentes : 4.5, 7.5 or 12 Mhz, la Russie (RWM), le Japon (JJY), le Royaume-Uni (MSF), la Suisse (HBG) selon un format similaire et compatible du signal DCF77, ou encore la Chine (BPM).

Il est ainsi possible de réaliser un moyen d'horodatage 10 apte à recevoir, à traiter et à décoder au moins un quelconque parmi ces signaux d'horodatage publics.

Un dispositif électronique 1, 1a n'est le plus souvent pas autonome en ce qui concerne son alimentation en énergie. Ceci permet de lui conserver une masse très réduite.

De l'énergie électrique, pour l'alimentation de son moyen de traitement 2, peut être fournie au dispositif électronique 1, 1a de manière connue, par un lecteur 6, 6a, 7. Une telle fourniture d'énergie électrique est encore possible pour alimenter le moyen d'horodatage 10. Une telle optique est applicable pour un procédé de signature. En effet, l'utilisation d'un dispositif électronique 1, 1a durant un procédé de signature électronique nécessite, de toute façon, une connexion dudit dispositif électronique 1, 1a au moyen d'un lecteur 6, 6a, 7. Il convient cependant, afin de déterminer une heure certaine HC de rester alimenté pendant la durée nécessaire à la réception d'une trame d'une minute.

Afin de pouvoir être autonome énergétiquement, et par exemple de pouvoir déterminer une heure certaine HC à tout moment, il est avantageux de disposer une batterie 8 embarquée sur le dispositif électronique 1, 1a apte à alimenter ledit dispositif électronique 1, 1a, y inclus le moyen d'horodatage 10.

Le moyen d'horodatage 10 précédemment décrit est avantageux en ce qu'il permet de déterminer une heure certaine HC. Cependant il peut arriver que le signal d'horodatage 12 ne soit pas disponible. Il peut encore arriver qu'un pirate tente de leurrer le dispositif au moyen d'un faux signal d'horodatage 12.

Aussi, selon un mode de réalisation avantageux, afin d'augmenter encore la certification de l'heure utilisée, le dispositif électronique 1, 1a comprend encore un deuxième moyen d'horodatage 20, embarqué sur le dispositif électronique 1, 1a.

Ce deuxième moyen d'horodatage 20 est par exemple réalisé selon l'un des modes décrits dans une autre demande de brevet FR2837960 du même demandeur. Le principe est par exemple d'utiliser une capacité dont on mesure la charge relative afin d'estimer une durée depuis son dernier chargement. Un tel principe est avantageux en ce qu'il ne nécessite pas d'alimentation électrique. Une telle alimentation électrique est en effet le plus souvent absente d'un dispositif électronique 1, 1a de type mémoire sécurisée.

Dans le cas où une batterie 8 est présente et embarquée dans le dispositif électronique 1, 1a, un autre principe peut être utilisé. Le deuxième moyen d'horodatage 20 peut être réalisé par un circuit d'horloge, tel un circuit piézoélectrique.

Un tel dispositif électronique 1, 1a, doté d'une heure certaine HC ainsi déterminée, est avantageusement utilisable dans un procédé de certification et/ou de signature électronique. Les procédés qui vont être décrits comprennent typiquement des programmes informatiques mis en oeuvre par le moyen de traitement 2, 2a du dispositif électronique 1, 1a.

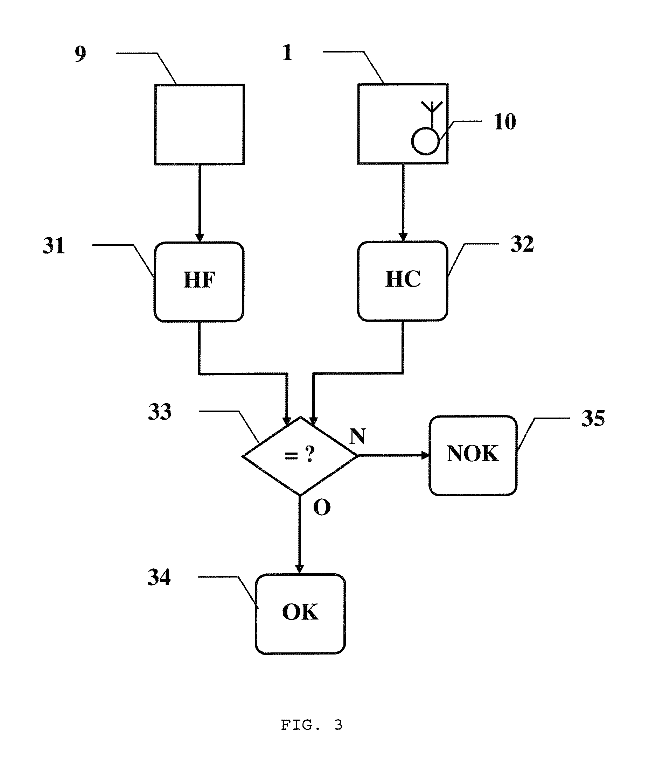

Un procédé de certification d'une heure est illustré à la figure 3. L'objet de ce procédé est de vérifier qu'une heure fournie HF est suffisamment proche de l'heure réelle effective pour pouvoir être considérée et utilisée comme une heure certaine HC. Pour cela cette heure fournie HF est comparée à une heure considérée comme certaine HC.

Un procédé de certification d'une heure utilisant un tel dispositif électronique 1, 1a comprend les étapes suivantes. Selon une première étape 31, le dispositif électronique 1, 1a reçoit 31 une heure fournie HF, à certifier. Par principe, cette heure fournie HF n'est pas nécessairement sûre de part son origine ou son traitement.

Selon une seconde étape 32, sensiblement concomitante avec la première étape 31, ou du moins telle que les deux heures partagent une référence commune et puissent être comparées, il est déterminé par le dispositif électronique 1, 1a une heure certaine HC, et cette détermination 32 de l'heure certaine HC est réalisée au moyen dudit moyen d'horodatage 10 présent sur le dispositif électronique 1, 1a, à partir d'un signal d'horodatage public 12.

Selon une troisième étape 33, les deux heures, l'heure fournie HF, à certifier, et l'heure certaine HF, sont comparées 33. Il est ici employé un seuil de distance temporelle maximale entre l'heure fournie HF et l'heure certaine HC qui peut être adapté en fonction de la sévérité de l'application qui nécessite une heure certifiée.

Selon une quatrième étape, il est produit un résultat de certification, positif 34 ou négatif 35 en fonction du résultat de ladite comparaison 33. Ainsi, si l'heure fournie HF est sensiblement égale, au seuil de distance temporelle ci-dessus près, à l'heure certaine HC, il est rendu un résultat 34 positif OK. Au contraire si l'heure fournie est trop éloignée de l'heure certaine HC, il est rendu un résultat 35 négatif NOK.

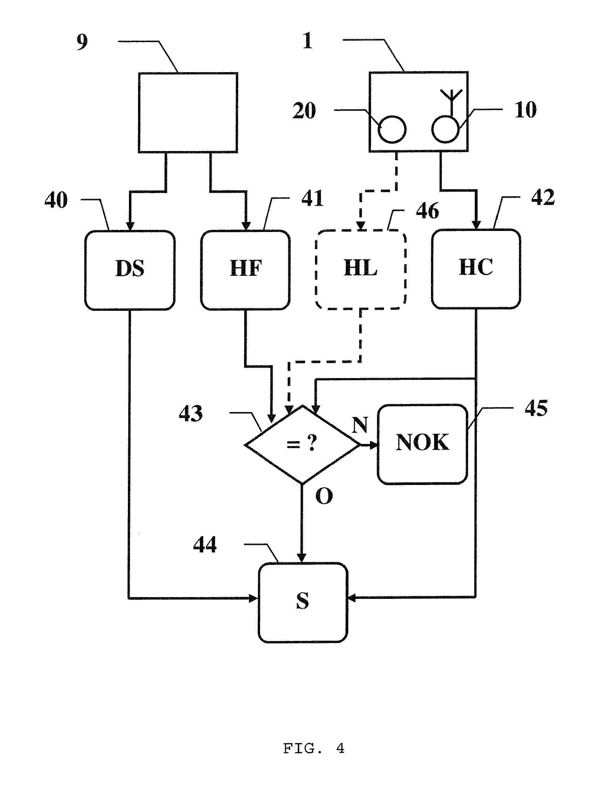

Un procédé de signature électronique d'une donnée est illustré à la figure 4. L'objet de ce procédé est de produire, à partir d'une donnée à signer DS, une signature électronique S unique et propre au signataire.

Un procédé de signature électronique d'une donnée DS utilisant un tel dispositif électronique 1, 1a est typiquement réalisé au moyen d'un terminal 9, connecté à un lecteur 6, 6a, 7. Le dispositif électronique 1, 1a est utilisé pour réaliser une étape essentielle de cryptage qui permet de signer en attestant de la participation du signataire, typiquement au moyen d'un code secret/clé cryptographique propre au signataire et contenu dans la mémoire sécurisée 3, 3a du dispositif électronique 1, 1a.

Le terminal 9 prépare une donnée à signer DS. Cette donnée à signer DS peut être un mot, une phrase ou tout un document. Elle est typiquement fournie sous forme d'un fichier. La préparation peut comprendre une étape de hachage de ladite donnée à signer DS.

Une première étape 40 consiste à fournir ladite donnée à signer DS au dispositif électronique 1, 1a.

Selon une deuxième étape 42, le dispositif électronique 1, 1a détermine une heure certaine HC, et cette détermination de l'heure certaine HC est réalisée au moyen dudit moyen d'horodatage 10 présent sur le dispositif électronique 1, 1a, à partir d'un signal d'horodatage public 12.

Selon une troisième étape 44, le dispositif électronique 1, 1a, produit une signature S. Ceci est typiquement réalisé par le moyen de traitement 2, de manière connue, par application d'un algorithme de signature. Ledit algorithme de signature est typiquement un algorithme de cryptage. Il prend en entrée d'une part ladite donnée à signer DS, et d'autre part l'heure certaine HC, qui se trouvent, par l'application de l'algorithme de signature, intimement liées dans la signature S ainsi produite. L'algorithme de signature inclut encore typiquement un code secret, ou clé de cryptage, propre au signataire et qui permet ainsi de prouver que la signature émane du signataire. Cette clé de cryptage est typiquement stockée dans la mémoire sécurisée 3, 3a du dispositif électronique 1, 1a. La signature S produite peut ensuite être envoyée au terminal 9 demandeur.

Afin de complexifier le procédé de signature électronique, il est encore possible de rajouter les étapes suivantes. Il est encore transmis 41 au dispositif électronique 1, 1a une heure fournie HF. Selon un mode de réalisation, cette heure fournie HF est une heure provenant du terminal 9, par exemple l'heure système dudit terminal 9.

De manière similaire au procédé de certification d'une heure, l'heure fournie HF est comparée 43 à l'heure certaine HC. Le résultat de cette comparaison 43 conditionne la production 44 de la signature S. Ainsi la signature S n'est produite 44 que si l'heure fournie HF est certifiée. A défaut, si la comparaison 43 de l'heure fournie HF et de l'heure certaine HC est négative, la signature S n'est pas produite. Dans ce cas, il peut, ou non, être renvoyé 45 un message d'erreur NOK, éventuellement circonstancié.

Selon un mode de réalisation avantageux, lorsque le dispositif électronique 1, 1a, comprend un deuxième moyen d'horodatage 20, l'heure locale HL obtenue au moyen de ce deuxième moyen d'horodatage 20 est utilisée 46 comme une heure fournie HF.

Ce mode est avantageux en ce qu'une comparaison des deux heures, l'heure certaine HC issue du premier moyen d'horodatage 10 et l'heure locale HL issue du deuxième moyen d'horodatage 20, permet de renforcer la sécurité du procédé de signature électronique. Il est en effet plus difficile de leurrer, simultanément et de manière cohérente, les deux moyens d'horodatage 10,20.

Ce mode de réalisation est utilisable alternativement ou complémentairement avec le mode de réalisation précédent. Ainsi, selon une utilisation complémentaire, il est possible d'avoir en plus de l'heure certaine HC, deux heures fournies : une heure fournie/locale HL issue du deuxième moyen d'horodatage 20 et une heure fournie HF issue du terminal 9. Dans un tel mode de réalisation les deux heures fournies HF, HL sont comparées à l'heure certaine HC, et un double résultat positif est nécessaire à la production 44 d'une signature électronique S.

## Revendications

1. Dispositif électronique, du type mémoire sécurisée, ***caractérisé en ce qu'**il* comprend un moyen d'horodatage (10) apte à déterminer une heure certaine (HC) à partir d'un signal horodateur (12) radio fréquentiel.

2. Dispositif électronique selon la revendication **1**, où le dispositif électronique est une carte à microcircuit (1) ou une clé USB (1a).

3. Dispositif électronique selon l'une quelconque des revendications **1** ou **2**, où le moyen d'horodatage (10) comprend au moins une antenne radiofréquence (13) et un récepteur radiofréquence (14).

4. Dispositif électronique selon la revendication **3**, où le moyen d'horodatage (10) est apte à recevoir et à traiter un signal horodateur (12) public.

5. Dispositif électronique selon la revendication 4, **caractérisé en ce que** le signal horodateur est le signal DCF77.

6. Dispositif électronique selon l'une quelconque des revendications **1** à **5**, comprenant encore un moyen d'alimentation autonome (8) embarquée sur le dispositif électronique (1, 1a), apte à alimenter le dispositif électronique (1,1a).

7. Dispositif électronique selon l'une quelconque des revendications **1** à **6**, comprenant encore un deuxième moyen d'horodatage (20), apte à déterminer une heure locale (HL).

8. Procédé de certification d'une heure, utilisant un dispositif électronique (1, 1a) selon l'une quelconque des revendications **1** à **7**, comprenant les étapes de :
- réception (31) d'une heure fournie (HF, HL),
- détermination (32) d'une heure certaine (HC),
- comparaison (33) de l'heure fournie (HF, HL) et de l'heure certaine (HC),
- production d'un résultat de certification, positif (34) si l'heure fournie (HF, HL) est sensiblement égale à l'heure certaine (HC) et négatif (35) sinon,
***caractérisé en ce que*** la détermination (32) de l'heure certaine (HC) est réalisée au moyen dudit moyen d'horodatage (10).

9. Procédé de signature électronique, utilisant un dispositif électronique (1, 1a) selon l'une quelconque des revendications **1** à **7**, comprenant les étapes de :
- réception (40) d'une donnée à signer (DS),
- détermination (42) d'une heure certaine (HC),
- production (44) d'une signature (S) par application d'un algorithme de signature à ladite donnée à signer (DS) et à ladite heure certaine (HC),
***caractérisé en ce que*** la détermination (42) de l'heure certaine (HC) est réalisée au moyen dudit moyen d'horodatage (10).

10. Procédé selon la revendication **9**, comprenant encore les étapes de :
- réception (41) d'une heure fournie (HF, HL),
- comparaison (43) de l'heure fournie (HF, HL) et de l'heure certaine (HC),
- production (44) de la signature (S) seulement si l'heure fournie (HF, HL) est sensiblement égale à l'heure certaine (HC).

11. Procédé selon l'une des revendications **8** ou **10**, où l'heure fournie est une heure locale (HL) obtenue au moyen du deuxième moyen d'horodatage (20).
